# EUROPEAN PATENT SPECIFICATION

(11) **EP 1 466 294 B1**
(45) Date of publication and mention of the grant of the patent: **07.05.2008**
(21) Application number: 03700341.5
(22) Date of filing: 08.01.2003
(51) Int. Cl.: G06K 9/00

(54) **OPTICAL BIOMETRIC SENSOR WITH PLANAR WAVEGUIDE**
OPTISCHER BIOMETRISCHER SENSOR MIT PLANAREM WELLENLEITER
DETECTEUR BIOMETRIQUE OPTIQUE A GUIDE D'ONDES PLANAIRE

(30) Priority: 18.01.2002 GB 0201080
(43) Date of publication of application: 13.10.2004
(73) Proprietor: QinetiQ Limited, London, SW1E 6PD (GB)
(72) Inventor: SWATTON, Stewart Nathan R., c/o QINETIQ LIMITED, Malvern, Worcestershire WR14 3PS (GB)
(74) Representative: Yelland, Carl
(86) International application number: PCT/GB2003/000042
(87) International publication number: WO 2003/063065

(56) References cited:
- WO-A-01/18741
- FUJIEDA I ET AL: "FINGERPRINT INPUT BASED ON SCATTERED-LIGHT DETECTION" APPLIED OPTICS, OPTICAL SOCIETY OF AMERICA,WASHINGTON, US, vol. 36, no. 35, 10 December 1997 (1997-12-10), pages 9152-9156, XP000828205 ISSN: 0003-6935
- DRAKE M D ET AL: "WAVEGUIDE HOLOGRAM FINGERPRINT ENTRY DEVICE" OPTICAL ENGINEERING, SOC. OF PHOTO-OPTICAL INSTRUMENTATION ENGINEERS. BELLINGHAM, US, vol. 35, no. 9, 1 September 1996 (1996-09-01), pages 2499-2505, XP000633939 ISSN: 0091-3286

## Description

This invention relates to biometric sensors.

Biometrics is the field of technology concerned with authenticating individuals' identities using one or more personal physical attributes such as fingerprints, iris structure/colour, voice patterns and signature. Biometric systems which record and match fingerprints to establish an individual's identity are well-known. Any such system comprises a fingerprint sensor for forming a representation of an individual's fingerprint and processing means for matching that representation to one or more reference representations of fingerprints.

Fingerprint sensors used in such systems employ a variety of technologies to form a representation of an individual's fingerprint. For example in digital optical sensors, an image of an individual's fingerprint is formed on a charge coupled device (CCD), the output of which is digitised. Such sensors are comparatively bulky and complex. In capacitive silicon sensors, the capacitance between an individual's finger and a silicon platen as a function of position in the plane of the platen is used to generate a representation of an individual's fingerprint. Generally, the ridges of an individual's fingerprint will give rise to higher capacitance than the valleys thereof. Another type of fingerprint sensor utilises ultrasound imaging technology; such sensors provide accurate fingerprint representations but are bulky and expensive. Thermal fingerprint sensors operate by detecting temperature differences between ridges and valleys in an individual's fingerprint when in contact with a flat surface.

Another type of fingerprint sensor operates by detecting pressure differences across a fingerprint when an individual places his finger on the sensor, such differences corresponding to ridges and valleys in the individual's fingerprint. One such sensor incorporates a light-emitting phosphor layer. Ridges of a fingerprint apply a higher pressure to the sensor than do valleys of the fingerprint. In those regions corresponding to fingerprint ridges, increased pressure allows weak electrical currents to pass through the light-emitting phosphor layer generating light which is detected by a detector array, thus forming a fingerprint image.

Three examples of optical biometric fingerprint sensors which comprise imaging means for forming an image of a fingerprint on a detector are disclosed, respectively, in International Patent Application Number PCT/US00/24669, Optical Engineering (SPIE), volume 35. No 9, 1996 and Applied Optics volume 36, no 35, December 1997. The first of these (PCT/US00/24469) employs a single lens; the other two employ arrays of lenses or lens-like elements (micro lenses and arrays of GRIN fibres acting as lenses, respectively.)

A particular sub-set of fingerprint sensors, known as a direct optical sensors, provides sensors in which photons emitted at points of contact between an individual's finger and a sensor (i.e. at the ridges of an individual's fingerprint) are detected directly by a detector array in order to form a representation of an individual's fingerprint This direct optical sensing precludes the need for imaging apparatus within the sensor, providing for simple and inexpensive optical biometric sensors

One such direct optical sensor is described in international patent application PCT/EP00/03849 (international publication number WO 00/70547). This sensor comprises a CMOS detector array or CCD and a fibre-optic faceplate. The fibre-optic faceplate comprises an array of short optical fibres arranged perpendicularly to the plane of the CMOS detector array. In use, an individual places his finger onto the faceplate and residual light emitted at points of contact between the individual and the sensor, i.e. at the ridges of the individual's fingerprint, is guided by optical fibres immediately under the ridges of the individual's finger and directed to the CMOS detector array or CCD at which an image of the individual's fingerprint is formed.

One problem with this sensor is that the requirement for a fibre-optic faceplate adds significantly to the cost and complexity of the sensor. Another problem with this sensor is that representations of fingerprints formed by it are susceptible to noise produced by accumulated dirt and grease on the fibre-optic faceplate.

It is an object of the invention to overcome or ameliorate the aforementioned problems.

According to a first aspect of the present invention, this object is achieved by a biometric sensor according to the pre-characterising portion of claim 1, characterised in that the sensor further comprises an interference filter (55) disposed between the planar slab waveguide and the detecting means so as to provide a high resolving power.
Preferably, the means for introducing radiation into the core layer of the planar slab waveguide comprises one or more diode lasers or light-emitting diodes.
This allows intensity of light within the waveguide to be adjusted, enabling images formed by the sensor to be optimised.

According to a second aspect of the invention, there is provided an electronic apparatus comprising sensor of the invention. Use of such an apparatus may be restricted to one or more individuals having a fingerprint a representation of which is stored in the apparatus, thus precluding the need for a legitimate user of the apparatus to remember a personal identification number.

According to third aspect of the invention there is provided a method of forming a representation of an individual's fingerprint or palmprint comprising the step of directing radiation from one or more points of contact of the individual with the core of an optical waveguide towards a detector, characterised in that the radiation is so directed by the step of placing the individual's finger in contact with the core of a planar slab waveguide so as to cause radiation initially guided therein to be diverted out of the core and towards the detector.

Embodiments of the invention are described below by way of example only and with reference to the accompanying drawings in which:

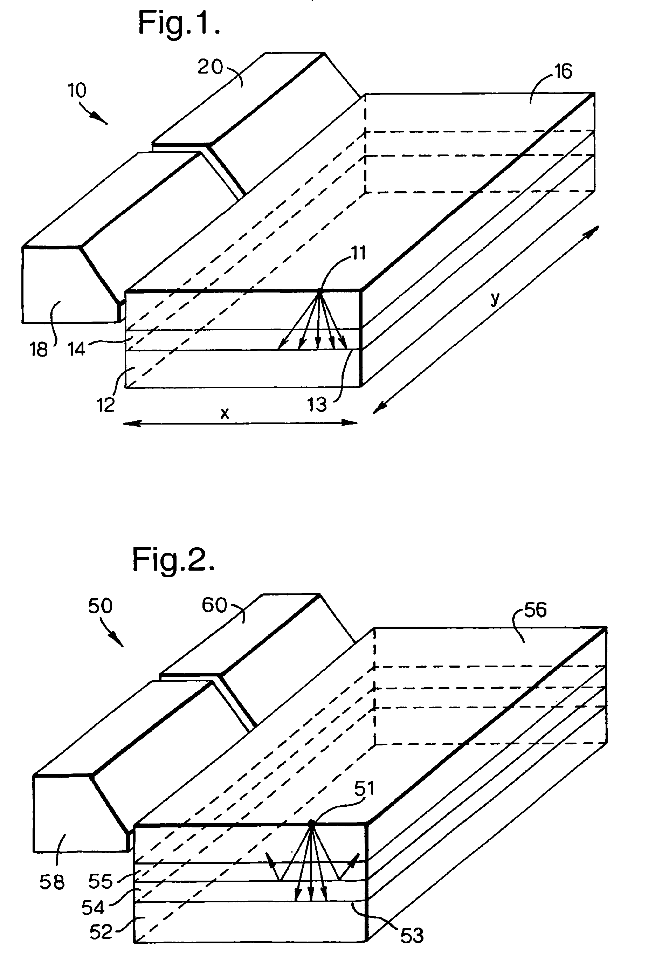

Figures 1 and 2 show perspective views of biometric sensors of the invention.

Referring to Figure 1, a biometric sensor of the invention is indicated generally by 10. The sensor 10 comprises the following elements disposed together in the following order: a CMOS detector array 12, a transparent layer of polymer or glass 14, and a glass waveguide layer 16. Each of the elements has a width x of 15mm and a length y of 20mm. These dimensions are not critical and may be varied in alternative embodiments of the invention. The CMOS detector array 12 comprises an array of 240 x 360 pixels and may be a standard, commercially available device. The polymer or glass layer 14 has a thickness of approximately 0.1 mm and the glass waveguide layer 16 has a thickness of approximately 0.5 mm, although these dimensions are not critical. The layer 14 acts as a protective layer for the CMOS detector array 12, and should be sufficiently thick to ensure multi-mode waveguiding.

The sensor 10 further comprises two diode-laser arrays 18, 20 each having an emitting facet 10mm wide which is positioned adjacent one edge of the glass waveguide 16. Light emitted by the diode laser arrays 18, 20 is guided throughout the volume of the glass waveguide 16.

In use of the sensor 10, an individual's finger is placed on the exposed surface of the glass waveguide layer 16. At those positions, such as 11, where a fingerprint ridge of the individual makes contact with the glass waveguide 16, a proportion of light within the waveguide 16 ceases to be guided therein and passes out of the waveguide 16 and through the layer 14 and is detected at the detector array 12. An image of the individual's fingerprint is thus formed on the detector array 12.

Referring now to Figure 2, another sensor of the invention is indicated generally by 50. The sensor 50 has a similar construction to that of the sensor 10, and comprises a CMOS detector array 52, a layer 54, an interference filter 55, a glass waveguide 56 and diode laser arrays 58, 60. In use of the sensor 50, an individual's finger is placed on the exposed surface of the glass waveguide layer 56. At positions, such as 51, where a fingerprint ridge of the individual makes contact with the glass waveguide 56, a proportion of light within the waveguide 56 ceases to be guided therein and passes out of the waveguide 56 and through the layer 54 and interference filter 55, and is detected at the CMOS detector array 52. An image of the individual's fingerprint is thus formed on the CMOS detector array 52.

The interference filter 55 operates to reduce the solid angle of diverted light subtended by the CMOS detector array 52 at the point at which the individual's fingerprint ridge makes contact with the waveguide 56. This provides the sensor 50 with a greater resolution than that of the sensor 10.

Sensors of the invention are principally intended to image an individual's fingerprint, however they are also suitable for examining other, similar, physical characteristics of an individual, for example palm prints.

An alternative sensor of the invention comprises a waveguide formed from a transparent material other than glass, for example a transparent polymer.

In further alternative sensors of the invention, light may be introduced into, and distributed within, the waveguide of a sensor of the invention by other means. For example, a sensor of the invention may comprise a plurality of light-emitting diodes disposed along the edges of the sensor's waveguide. Alternatively, reflective coatings may be applied to edges of a sensor's waveguide, and light from a laser diode arranged to undergo multiple reflections within the waveguide to provide substantially uniform illumination therein.

Referring again to Figure 1, grease or dirt collecting on the exposed surface of the waveguide 18 results in noise in images of fingerprints formed by the sensor 10. Such noise may be recorded by increasing the intensity of light within the waveguide 18 so as to form a clear image of the grease or dirt on the CMOS detector array 12. The intensity of light within the waveguide is increased by increasing the current supplied to the diode laser arrays 20, 22. The image of the grease or dirt may then be subtracted from a fingerprint image to eliminate noise therefrom. Image recording and subtraction are performed by image recording and processing means (not shown).

A sensor of the invention may be incorporated into an apparatus, particularly an electronic apparatus such as a mobile telephone, the use of which is required to be restricted to one or more individuals. Such an apparatus further comprises means for storing one or more representations of fingerprints and means for comparing stored representations of fingerprints with representations generated by the sensor. Such an apparatus avoids the need for a legitimate user of the apparatus to remember and enter a personal identification number in order to use the apparatus. Rather, a user is authenticated by his fingerprint.

## Claims

1. A direct optical biometric sensor (10; 50) comprising detecting means (12; 52) for detecting radiation and radiation directing means (18, 20, 16; 58, 60, 56) for directing radiation from a point of contact (11; 51) of an individual with the radiation directing means towards the detecting means in response to contact of the individual with the radiation directing means at the point of contact, wherein the radiation directing means comprises a planar slab waveguide (16; 56) having a core layer with a region which is at least partly exposed and means (18, 20; 58, 60) for introducing radiation into the core layer such that radiation propagates throughout the exposed region thereof, **characterised in that** the sensor further comprises an interference filter (55) disposed between the planar slab waveguide and the detecting means.

2. A sensor according to claim 1 wherein the means for introducing radiation into the core layer of the planar slab waveguide comprises one or more diode lasers (18, 20; 58, 60) or light-emitting diodes.

3. An electronic apparatus comprising a sensor according to any preceding claim.

## Patentansprüche

1. Direkter optischer biometrischer Sensor (10, 50), der umfaßt: eine Erfassungseinrichtung (12; 52) zur Erfassung von Strahlung und eine Einrichtung zum Richten von Strahlung (18, 20, 16; 58, 60, 56), die Strahlung von einem Kontaktpunkt (11; 51) eines Individuums mit der Einrichtung zum Richten von Strahlung als Reaktion auf den Kontakt des Individuums mit der Einrichtung zum Richten von Strahlung am Kontaktpunkt zur Erfassungseinrichtung richtet,
wobei die Einrichtung zum Richten von Strahlung einen planaren Bandleiter (16; 56), der eine Kernschicht mit einem Bereich aufweist, der mindestens teilweise freiliegend ist, und eine Einrichtung (18, 20; 58, 60) zum Einstrahlen von Strahlung in die Kernschicht derart umfaßt, dass sich die Strahlung im freiliegenden Bereich ausbreitet,
**dadurch gekennzeichnet,**
**dass** der Sensor ferner ein Interferenzfilter (55) umfaßt, das zwischen dem planaren Bandleiter und der Erfassungseinrichtung angeordnet ist.

2. Sensor nach Anspruch 1, bei dem die Einrichtung zur Einstrahlung von Strahlung in die Kernschicht des planaren Bandleiters eine oder mehrere Diodenlaser (18, 20; 58, 60) oder lichtemittierende Dioden umfaßt.

3. Elektronische Vorrichtung, die einen Sensor nach einem der vorhergehenden Ansprüche umfaßt.

## Revendications

1. Détecteur biométrique optique direct (10 ; 50) comprenant un moyen de détection (12 ; 52) pour détecter un rayonnement et un moyen pour diriger un rayonnement (18, 20, 16 ; 58, 60, 56) pour diriger un rayonnement d'un point de contact (11 ; 51) d'un individu avec le moyen pour diriger un rayonnement vers le moyen de détection en réponse au contact de l'individu avec le moyen pour diriger un rayonnement au point de contact dans lequel, le moyen pour diriger un rayonnement comprend un guide d'ondes à lame plane (16 ; 56) ayant une couche de noyau avec une région qui est au moins en partie exposée et un moyen (18, 20 ; 58, 60) pour introduire un rayonnement dans la couche de noyau de sorte que le rayonnement se propage à travers sa région exposée, **caractérisé en ce que** le détecteur comprend en outre un filtre interférentiel (55) disposé entre le guide d'ondes à lame plane et le moyen de détection.

2. Détecteur selon la revendication 1, dans lequel le moyen pour introduire un rayonnement dans la couche de noyau du guide d'ondes à lame plane comprend une ou plusieurs diodes laser (18, 20 ; 58, 60) ou diodes électroluminescentes.

3. Dispositif électronique comprenant un détecteur selon l'une quelconque des revendications précédentes.
